Europäisches Patentamt

European Patent Office

Office européen des brevets

(19)

(11) Numéro de publication : **0 225 813 B1**

(12)                    FASCICULE DE BREVET EUROPEEN

(45) Date de publication du fascicule du brevet :
05.06.91 Bulletin 91/23

(51) Int. Cl.⁵ : **D06F 37/30**

(21) Numéro de dépôt : 86402238.9

(22) Date de dépôt : 09.10.86

(54) **Dispositif de commande du moteur d'entraînement du tambour d'un lave-linge.**

(30) Priorité : 11.10.85 FR 8515110

(43) Date de publication de la demande :
16.06.87 Bulletin 87/25

(45) Mention de la délivrance du brevet :
05.06.91 Bulletin 91/23

(84) Etats contractants désignés :
AT BE CH DE ES FR GB GR IT LI LU NL SE

(56) Documents cités :
EP-A- 0 039 645
DE-A- 2 716 240
DE-A- 3 303 992
FR-A- 2 546 540

(73) Titulaire : CIAPEM
137, rue de Gerland
F-69007 - Lyon (FR)

(72) Inventeur : Delhomme, Bernard
THOMSON-CSF SCPI 19, avenue de Messine
F-75008 Paris (FR)

(74) Mandataire : Grynwald, Albert et al
THOMSON-CSF SCPI
F-92045 PARIS LA DEFENSE CEDEX 67 (FR)

## Description

L'invention est relative à un dispositif de commande du fonctionnement du moteur d'entrainement du tambour d'un lave-linge.

Un lave-linge automatique comporte habituellement un tambour perforé contenant le linge et tournant à l'intérieur d'une cuve dans laquelle est introduite l'eau de lavage ou de rinçage.

Au cours du lavage le tambour, qui est entrainé par un moteur électrique, tourne à une vitesse déterminée, en général de l'ordre de 50 tours par minute, alternativement dans un sens et dans un autre, les périodes de rotation étant séparées par des périodes de repos. Lors de la vidange de la cuve on fait souvent tourner le tambour à une vitesse supérieure afin d'effectuer un essorage du linge de courte durée. Lorsque la vitesse de rotation du tambour pour l'essorage est élevée il est nécessaire d'augmenter progressivement cette vitesse afin de répartir le linge de façon uniforme dans le tambour pour éviter les balourds générateurs, à grande vitesse, de vibrations dangereuses pour la machine. Toutes ces opérations sont commandées par un dispositif de commande.

Un tel dispositif est le plus souvent un programmateur électromécanique avec des cames agissant sur des interrupteurs dont l'état, ouvert ou fermé, détermine la vitesse de rotation du tambour. Un exemple d'un tel dispositif est décrit dans le brevet français n° 2 546 540. Dans cet exemple la vitesse du moteur d'entrainement du tambour est déterminée par l'angle de phase d'allumage, à chaque période d'un signal alternatif (celui du secteur d'alimentation), d'un interrupteur statique, tel qu'un triac, en série avec le moteur. Cet angle de phase est engendré par un circuit présentant des entrées sensibles aux états des interrupteurs du programmateur électromécanique.

Un programmateur électromécanique est d'une réalisation relativement complexe et onéreuse en raison du grand nombre d'interrupteurs et de cames qu'il faut prévoir. Ainsi dans le programmateur décrit dans le brevet mentionné ci-dessus on fait appel à sept interrupteurs pour commander le fonctionnement du moteur d'entraînement du tambour lors de l'essorage.

L'invention vise à réduire le nombre de tels interrupteurs du programmateur électromécanique qu'il est nécessaire de mettre en oeuvre pour commander le fonctionnement du lave-linge.

Elle se rapporte à un dispositif pour la commande du moteur d'entraînement du tambour d'un lave-linge, comportant un programmateur électromécanique à cames agissant sur l'état d'interrupteurs et des moyens pour imposer une séquence de variation de vitesse du moteur pour un état, ouvert ou fermé, déterminé de moyens interrupteurs du programmateur électromécanique, qui est caractérisé en ce qu'il comprend un microprocesseur dont au moins une entrée est sensible à l'état d'un interrupteur du programmateur électromécanique, ce microprocesseur imposant, à chaque phase du programme, ladite séquence de variation de vitesse du moteur pour un état déterminé de cet interrupteur. Ainsi le nombre d'interrupteurs du programmateur électromécanique peut être réduit car les diverses vitesses de rotation du moteur sont déterminées par le microprocesseur.

Il est certes connu de prévoir un microprocesseur pour commander le fonctionnement du moteur d'entraînement du tambour d'un lave-linge. Mais dans ces dispositifs connus le microprocesseur n'est pas associé à un programmateur électromécanique, et, dans ce cas, après une coupure de l'alimentation en énergie électrique de la machine l'état d'avancement du programme de lavage ne peut être conservé en mémoire. Au contraire avec l'invention le degré d'exécution du programme est conservé en mémoire par la position de la came ou des cames du programmateur électromécanique.

Par ailleurs dans le document DE-A-2 716 240 est décrit un programmateur à microcalculateur et programmateur électromécanique. Mais le dispositif décrit dans ce document n'a pas pour but de réduire le nombre d'interrupteurs du programmateur ; en outre le microcalculateur n'est pas un microprocesseur mais une mémoire morte.

Dans une réalisation le programmateur électromécanique ne comporte que deux interrupteurs dont le premier est fermé (ou ouvert) lors des phases de lavage et de rinçage et dont le second est fermé (ou ouvert) lors des phases de vidange de la cuve après le rinçage et lors des phases d'essorage.

Dans cette réalisation, ou l'on prévoit un interrupteur du programmateur électromécanique qui est fermé (ou ouvert), d'une part, lors des phases de vidange de la cuve après les rinçages, et d'autre part, lors des phases d'essorage, le microprocesseur commande de façon identique le fonctionnement du moteur dans ces deux situations. Ces situations diffèrent par la durée de fermeture (ouverture) de l'interrupteur électromécanique : lors de la vidange après chaque rinçage, la commande est interrompue, par ouverture (ou fermeture) de l'interrupteur du programmateur électromécanique, après un temps au bout duquel peut se produire un (ou plusieurs) essorage(s) de courte durée. Il est également possible d'interrompre la séquence avant que n'intervienne un essorage. Pour l'essorage final l'interrupteur est fermé (ouvert) pendant un temps sensiblement plus long et, de préférence, lors de la dernière phase de l'essorage la vitesse de rotation du tambour est plus élevée que lors des essorages de courtes durées.

Lors du rétablissement, après coupure, de l'alimentation en énergie électrique de la machine, si ledit interrupteur (électromécanique) de commande de vidange et essorage est fermé, cette opération est reprise à son début.

L'invention concerne, selon un autre de ses aspects, un dispositif pour la commande du moteur d'entrainement du tambour d'un lave-linge permettant, lors de l'essorage, une augmentation progressive de la vitesse depuis une valeur moyennement élevée, par exemple 500 tours par minute pour le tambour, jusqu'à une valeur plus élevée, par exemple 800 tours par minute, la vitesse augmentant à un rythme modéré de l'ordre de 50 tours par minute en 20 secondes. On a constaté qu'avec cette accélération angulaire les contraintes qui s'exercent sur le tambour à vitesse d'essorage sont limitées.

D'autres caractéristiques et avantages de l'invention apparaîtront avec la description de certains de ses modes de réalisation, celle-ci étant effectuée en se référant aux dessins ci-annexés sur lesquels :

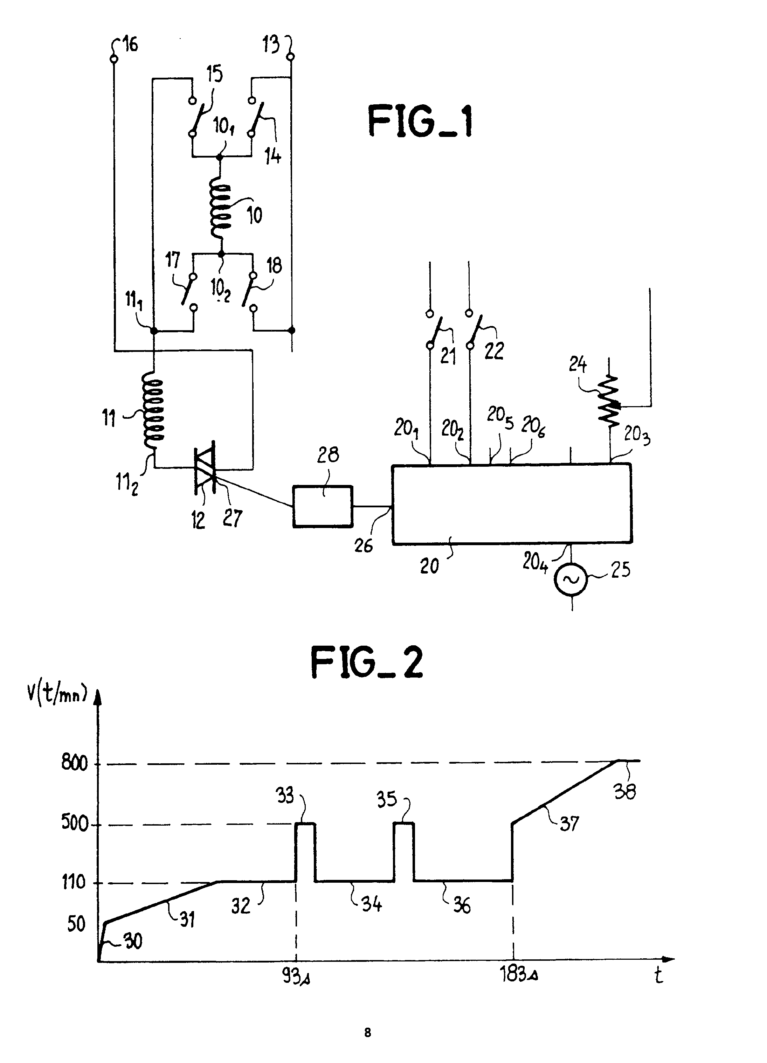

la figure 1 est un schéma montrant, de façon simplifiée, un dispositif conforme à l'invention et le moteur d'entrainement du tambour d'un lave-linge, et

la figure 2 est un diagramme d'une séquence de rotation du tambour du lave-linge lors de la vidange de la cuve et de l'essorage.

Dans l'exemple le moteur électrique d'entrainement du tambour du lave-linge est du type universel avec un enroulement de stator 10 en série avec l'enroulement de rotor 11. Ce moteur est également en série avec un triac 12 d'une commande par contrôle de phase.

Une borne $10_1$ du stator 10 est reliée à une première borne 13 du secteur d'alimentation en courant alternatif 220 volts, 50 hertz par l'intermédiaire d'un interrupteur 14. Cette même borne $10_1$ du stator 10 est connectée à une borne $11_1$ de l'enroulement de rotor 11 par l'intermédiaire d'un autre interrupteur 15. La borne opposée $11_2$ de l'enroulement 11 de rotor est reliée à la seconde borne 16 du secteur par l'intermédiaire du triac 12. Par ailleurs la seconde borne $10_2$ de l'enroulement 10 de stator est reliée à la première borne $11_1$ de l'enroulement 11 par l'intermédiaire d'un interrupteur 17 et à la borne 13 du secteur par l'intermédiaire d'un autre interrupteur 18.

De façon en soi connue pour que le moteur tourne dans un premier sens de rotation les interrupteurs 15 et 18 sont fermés alors que les interrupteurs 14 et 17 sont ouverts et, réciproquement, pour que le moteur tourne en sens inverse ce sont les interrupteurs 14 et 17 qui sont fermés et les interrupteurs 15 et 18 ouverts.

Le triac 12 est commandé de façon qu'à chaque période du signal alternatif d'alimentation il ne soit conducteur que pendant un temps qui est fonction de la vitesse désirée de rotation du moteur, et donc de la vitesse du tambour du lave-linge.

Cette commande du triac 12 est effectuée selon l'invention, grâce à un dispositif qui comporte, d'une part, un microprocesseur 20 et, d'autre part, un programmateur électromécanique du type à came(s) et interrupteurs 21 et 22. Un programmateur électromécanique à came(s) étant d'une constitution classique il n'est pas utile de le représenter en détail. On indiquera seulement qu'en général un tel programmateur comporte un micromoteur électrique synchrone entrainant un réducteur qui entraine lui-même une ou plusieurs cames. Selon la position angulaire de la came ou des cames les interrupteurs 21 et 22 sont ouverts ou fermés. Ces positions angulaires dépendent de l'état d'avancement du programme.

L'interrupteur 21 permet d'appliquer, lorsqu'il est fermé, un signal sur une première entrée $20_1$ du microprocesseur 20. L'interrupteur 22 applique également, lorsqu'il est fermé, un signal sur une seconde entrée $20_2$ du microprocesseur 20.

Une autre entrée $20_3$ du microprocesseur 20 reçoit un autre signal par l'intermédiaire d'un potentiomètre 24.

Par ailleurs, une génératrice tachymétrique 25 entraînée par le rotor du moteur universel délivre un signal représentatif de la vitesse de rotation du moteur, et donc de la vitesse du tambour, sur une entrée $20_4$ du microprocesseur 20.

Une sortie 26 du microprocesseur 20 est reliée à la gachette 27 du triac 12 par l'intermédiaire d'un circuit interface 28.

Comme indiqué ci-dessus, la sortie 26 du microprocesseur 20 commande, à chaque période du signal alternatif, l'angle de phase d'allumage, c'est-à-dire l'instant de fermeture du triac 12, en fonction de la vitesse de rotation désirée.

Cette vitesse désirée est en mémoire du microprocesseur 20. Elle est comparée, également par le microprocesseur, à la vitesse réelle, grâce au signal fourni par la génératrice tachymétrique 25, et ainsi l'angle de phase est ajusté en fonction de la différence entre la vitesse de consigne et la vitesse réelle, c'est-à-dire en fonction d'un signal d'erreur ; on a donc affaire à une régulation.

La vitesse de consigne dépend également, lors de l'essorage, de la position du potentiomètre 24.

L'interrupteur 21 est fermé lors des phases principales des opérations de prélavage, lavage et rinçage, quand la cuve est pleine d'eau. Dans ce cas la commande est telle que le tambour tourne à une vitesse d'environ 50 tours/minute d'abord dans un sens puis dans l'autre, ces périodes de rotation étant séparées par des périodes de repos. L'inversion du sens de rotation est réalisée par la commande, grâce au programmateur électromécanique, des interrupteurs 14, 15, 17 et 18.

L'interrupteur 22 est fermé lors de certaines périodes de vidange de la cuve, à savoir après chaque rinçage, et lors de phases d'essorage final.

Lorsque cet interrupteur 22 est fermé le microprocesseur 20 commande la rotation du tambour selon la séquence représentée sur la figure 2 qui est un diagramme sur lequel on a porté le temps en abscisses et les vitesses de rotation du tambour, exprimées en tours/minute, en ordonnées.

La vitesse est tout d'abord portée à 50 tours/minute environ (segment 30 sur la figure 2) ; ensuite – segment 31 – la vitesse est augmentée de façon plus lente jusqu'à 110 tours/minute environ. Cette rampe 31 permet de répartir convenablement le linge dans le tambour afin d'éviter les balourds. Cette vitesse de rotation de 110 tours/minute (qui est légèrement inférieure à la vitesse à partir de laquelle commencent à se produire les résonances de la machine) est ensuite maintenue (segment 32) pendant un temps de l'ordre de 70 secondes. Puis, environ 93 secondes après le début de la séquence, la vitesse est augmentée brusquement jusqu'à 500 tours/minute. Cette vitesse de 500 tours/minute est maintenue pendant environ 3 secondes (impulsion 33) puis est diminuée brusquement à 110 tours/minute. La rotation à cette dernière vitesse est maintenue (palier 34) pendant 20 secondes environ. Au bout de ces 20 secondes on applique de nouveau une "impulsion" d'essorage 35, c'est-à-dire que le tambour tourne de nouveau à 500 tours/minute pendant trois secondes. Après cette impulsion 35 le moteur tourne de nouveau selon le palier 36 à la vitesse de 110 tours/minute pendant vingt secondes. Au bout de 183 secondes (après le début de la séquence) la vitesse est portée rapidement à 500 tours/minute puis augmente progressivement (rampe 37) de 500 à 800 tours/minute. La séquence se termine par un palier 38 de rotation à 800 tours/minute dont la durée variable est imposée par le programmateur électromécanique, c'est-à-dire par la durée de fermeture de l'interrupteur 22.

Après certaines périodes de rinçage l'interrupteur 22 est fermé pendant un temps inférieur à 93 secondes, des essorages n'étant pas nécessaires après ces périodes.

Après d'autres rinçages l'interrupteur 22 est fermé pendant un temps de l'ordre de 170 secondes afin de mettre en oeuvre des essorages 33 et 35 de courte durée. La nécessité de telles impulsions d'essorage provient du fait que le mélange d'eau et de produit lessiviel expulsé du linge et qui traverse la paroi du tambour forme dans la cuve, après une période d'essorage de l'ordre de quelques secondes, d'une part de la mousse risquant de désamorcer la pompe de vidange, d'autre part un anneau liquide tournant entre le tambour et la cuve qui n'est pas évacué par cette pompe de vidange. Ainsi la durée des impulsions 33 et 35 est choisie à une valeur suffisamment faible pour que ne se forme pas la mousse et l'anneau liquide.

Au cours de l'essorage final l'interrupteur 22 est fermé pendant cinq à dix minutes environ. La rampe 37 est telle que la vitesse augmente à un taux de 50 tours/minute en vingt secondes environ. On a constaté que cette rampe permet de limiter les contraintes mécaniques résultant de la rotation à vitesse élevée lors de l'essorage.

Les vitesses de rotation lors des impulsions 33 et 35 et lors du dernier palier 38 sont réglables en fonction du signal appliqué sur l'entrée $20_3$ du microprocesseur 20.

Un avantage de l'invention est que le programmateur électromécanique est considérablement simplifié. En particulier il ne comporte pas de cames à rotation rapide comme il serait nécessaire pour imposer les impulsions d'essorage 33, 35 en l'absence du microprocesseur 20.

Le microprocesseur 20 peut être programmé pour détecter les balourds, par exemple en fonction de la valeur du signal d'erreur de la régulation, et pour, à la fin de chaque rampe 31 ou 37, ramener la vitesse de rotation du tambour à 50 tours/minute en cas de détection de balourds afin de répartir de nouveau de façon régulière le linge dans ce tambour.

Il est à noter que le temps au bout duquel le tambour tourne à 800 tours/minute est d'une valeur élevée, de l'ordre de cinq minutes. Cette durée peut être prohibitive pour certaines applications, par exemple pour le contrôle du bon fonctionnement de la machine à l'issue de sa fabrication. Pour remédier à cet inconvénient, dans une réalisation, la vitesse est augmentée directement à 800 tours/minute, par exemple en manoeuvrant suivant deux ou trois courses complètes le potentiomètre 24, ce qui confère alors un ordre d'augmentation directe de 800 tours/minute au microprocesseur 20.

Le microprocesseur 20 comporte des entrées supplémentaires $20_5$, $20_6$, etc... permettant la connexion de l'interrupteur 22 pour des séquences différentes de celle représentée sur la figure 2.

## Revendications

1. Dispositif pour la commande du moteur (10, 11) d'entraînement du tambour d'un lave-linge, comportant un programmateur électromécanique à cames agissant sur l'état d'interrupteurs (21, 22) et des moyens pour imposer une séquence de variation de vitesse du moteur pour un état, ouvert ou fermé, déterminé de moyens interrupteurs du programmateur électromécanique, caractérisé en ce qu'il comprend un microprocesseur (20) dont au moins une entrée ($20_1$, $20_2$) est sensible à l'état d'un interrupteur (21, 22) du programmateur électromécanique, ce microprocesseur imposant, à chaque phase du programme, ladite séquence de variation de vitesse du moteur pour un état déterminé de cet interrupteur (21, 22).

2. Dispositif selon la revendication 1, caractérisé en ce qu'un interrupteur (22) du programmateur électromécanique connecté à l'entrée ($20_2$) du microprocesseur (20) est dans un premier état lors de certaines phases de vidange de la cuve et lors des phases d'essorage.

3. Dispositif selon la revendication 2, caractérisé en ce que la séquence imposée au moteur lorsque ledit interrupteur (22) du programmateur électromécanique est dans un premier état comporte une rotation à une vitesse légèrement inférieure à celle pour laquelle commencent à se produire les vibrations de résonance de la machine, au moins une impulsion d'essorage (33, 35), une rotation (34, 36) à ladite vitesse inférieure à celle pour laquelle commencent à se produire les vibrations de résonance et un essorage (37, 38) de longue durée.

4. Dispositif selon la revendication 3, caractérisé en ce que l'interrupteur (22) connecté à l'entrée (20₂) du microprocesseur (20) est placé dans son second état avant que ne se produise l'impulsion d'essorage (33) lors de périodes de vidange de la cuve après rinçage et est dans le premier état pendant un temps suffisant après d'autres rinçages pour que se produise l'impulsion d'essorage (33) mais non l'essorage de longue durée (37, 38).

5. Dispositif selon la revendication 3 ou 4, caractérisé en ce que la séquence impose deux impulsions d'essorage (33, 35) successives séparées par une rotation (34) à vitesse légèrement inférieure à celle pour laquelle commencent à se produire les vibrations de résonance.

6. Dispositif selon l'une quelconque des revendications 3 à 5, caractérisé en ce que la séquence de commande est telle que lors de l'essorage final la vitesse augmente brusquement jusqu'à une valeur égale à la vitesse atteinte lors de l'impulsion d'essorage puis augmente progressivement (37) jusqu'à une valeur supérieure (38).

7. Dispositif selon la revendication 6, caractérisé en ce que l'augmentation progressive de vitesse de rotation du tambour est de l'ordre de 50 tours/minute pour chaque période de vingt secondes.

8. Dispositif selon l'une quelconque des revendications précédentes, caractérisé en ce que le microprocesseur (20) comporte une seconde entrée (20₁) à laquelle est connecté un autre interrupteur (21) du composant électromécanique, le microprocesseur (20) commandant une rotation du tambour à vitesse constante lorsque cet autre interrupteur (21) est dans un premier état, ce dernier n'intervenant que lors des phases de prélavage, lavage ou rinçage proprement dits.

9. Dispositif selon l'une quelconque des revendications précédentes, caractérisé en ce que le microprocesseur comporte une troisième entrée (20₃) sur laquelle est appliqué un signal de consigne de vitesse d'essorage.

10. Dispositif selon la revendication 9, caractérisé en ce que le signal appliqué sur la troisième entrée (20₃) du microprocesseur (20) est un signal analogique fourni par un potentiomètre (24).

11. Dispositif selon la revendication 10, caractérisé en ce qu'un actionnement selon une séquence prédéterminée du potentiomètre (24) provoque la modification de la séquence de montée en vitesse pour que le tambour atteigne en peu de temps la vitesse maxium d'essorage.

12. Dispositif selon l'une quelconque des revendications précédentes, caractérisé en ce que le microprocesseur comporte une entrée (20₄) sur laquelle est appliqué un signal représentant la vitesse de rotation du tambour, le microprocesseur comparant cette vitesse réelle à la vitesse de consigne en mémoire pour réguler la vitesse de rotation

13. Dispositif selon la revendication 12, caractérisé en ce que, lorsque le signal d'erreur de la régulation dépasse une valeur prédéterminée lors d'une séquence d'augmentation de la vitesse, la vitesse est ramenée à une valeur inférieure pour recommencer l'augmentation.

14. Lave-linge comportant un dispositif selon l'une quelconque des revendications précédentes, caractérisé en ce que le moteur d'entraînement du tambour est du type universel et est en série avec un interrupteur commandé (12) dont l'électrode de commande (27) reçoit un signal représentant le signal de la sortie (26) du microprocesseur (20).

**Ansprüche**

1. Vorrichtung zur Steuerung des Antriebsmotors (10, 11) einer Waschmaschinen-Trommel, mit einem elektromechanischen Programmiergerät mit Nocken, die auf den Zustand von Unterbrechern (21, 22) einwirken, und mit Mitteln, um eine Geschwindigkeitsänderungsfolge des Motors für einen bestimmten, offenen bzw. geschlossenen Zustand der Mittel zum Unterbrechen des elektromechanischen Programmiergerätes zu erzwingen, dadurch gekennzeichnet, daß sie einen Mikroprozessor (20) umfaßt, wovon wenigstens ein Eingang (20₁, 20₂) für den Zustand eines Unterbrechers (21, 22) des elektromechanischen Programmiergerätes empfindlich ist, wobei bei jeder Phase des Programmes dieser Mikroprozessor die genannte Geschwindigkeitsänderungsfolge des Motors für einen bestimmten Zustand dieses Unterbrechers (21, 22) erzwingt.

2. Vorrichtung nach Anspruch 1, dadurch gekennzeichnet, daß ein Unterbrecher (22) des an den Eingang (20₂) des Mikroprozessors (20) angeschlossenen elektromechanischen Programmiergerätes während bestimmter Phasen des Entleerens des Bottichs sowie während der Schleuderphasen sich in einem ersten Zustand befindet.

3. Vorrichtung nach Anspruch 2, dadurch gekennzeichnet, daß die Folge, welche dem Motor aufgezwungen wird, wenn der genannte Unterbrecher (22) des elektromechanischen Programmiergerätes sich in einem ersten Zustand befindet, eine Drehung bei einer Geschwindigkeit, welche etwas geringer als diejenige ist, bei welcher die Resonanz-Erschütterungen der Waschmaschine aufzutreten beginnen, wenigstens einen Schleuderimpuls (33, 35), eine Drehung (34, 36) bei der genannten Geschwindigkeit, die geringer als diejenige ist, bei welcher die Resonanz-Erschütterungen beginnen, sowie ein Schleudern (37, 38) von großer Dauer umfaßt.

4. Vorrichtung nach Anspruch 3, dadurch gekennzeichnet, daß der an den Eingang (20$_2$) des Mikroprozessors (20) angeschlossene Unterbrecher (22) in seinen zweiten Zustand versetzt wird, bevor der Schleuderimpuls (33) während Perioden zum Entleeren des Bottichs nach dem Spülen auftritt, und sich in dem ersten Zustand während einer genügenden Dauer nach weiteren Spülvorgängen befindet, damit der Schleuderimpuls (33) auftritt, nicht aber das Schleudern (37, 38) über eine lange Zeitspanne.

5. Vorrichtung nach Anspruch 3 oder 4, dadurch gekennzeichnet, daß die Folge zwei aufeinanderfolgende Schleuderimpulse (33, 35) erzwingt, die durch eine Drehung (34) bei einer Geschwindigkeit getrennt sind, die etwas geringer als diejenige ist, bei welcher die Resonanz-Erschütterungen auftreten.

6. Vorrichtung nach einem der Ansprüche 3 bis 5, dadurch gekennzeichnet, daß die Steuerfolge so ist, daß während des Endschleuderns die Geschwindigkeit bis zu einem Wert plötzlich erhöht wird, der der erreichten Geschwindigkeit bei dem Schleuderimpuls entspricht, und dann allmählich (37) bis zu einem oberen Wert (38) erhöht wird.

7. Vorrichtung nach Anspruch 6, dadurch gekennzeichnet, daß die allmähliche Erhöhung der Drehgeschwindigkeit der Trommel in der Größenordnung von 50 Umdrehungen pro Minute für jede Periode von zwanzig Sekunden liegt.

8. Vorrichtung nach einem der vorstehenden Ansprüche, dadurch gekennzeichnet, daß der Mikroprozessor (20) einen zweiten Eingang (20$_1$), an welchen ein weiterer Unterbrecher (21) des elektromechanischen Bauteils angeschlossen ist, umfaßt, wobei der Mikroprozessor (20) eine Drehung der Trommel bei konstanter Geschwindigkeit steuert, wenn dieser weitere Unterbrecher (21) sich in einem ersten Zustand befindet, wobei dieser nur während den eigentlichen Vorwäsche-, Wäsche- oder Spülphasen interveniert.

9. Vorrichtung nach einem der vorstehenden Ansprüche, dadurch gekennzeichnet, daß der Mikroprozessor einen dritten Eingang (20$_3$), an welchen ein Sollsignal für die Schleudergeschwindigkeit angelegt wird, umfaßt.

10. Vorrichtung nach Anspruch 9, dadurch gekennzeichnet, daß das an den dritten Eingang (20$_3$) des Mikroprozessors (20) angelegte Signal ein von einem Potentiometer (24) abgegebenes Signal ist.

11. Vorrichtung nach Anspruch 10, dadurch gekennzeichnet, daß eine Betätigung gemäß einer vorbestimmten Folge des Potentiometers (24) die Veränderung der Folge des Geschwindigkeitsanstiegs verursacht, damit die Trommel die maximale Schleudergeschwindigkeit in kurzer Zeit erreicht.

12. Vorrichtung nach einem der vorstehenden Ansprüche, dadurch gekennzeichnet, daß der Mikroprozessor einen Eingang (20$_4$), an welchen ein Signal angelegt wird, welches für die Drehgeschwindigkeit der Trommel repräsentativ ist, umfaßt, wobei der Mikroprozessor diese reale Geschwindigkeit mit der gespeicherten Sollgeschwindigkeit vergleicht, um die Drehgeschwindigkeit zu regeln.

13. Vorrichtung nach Anspruch 12, dadurch gekennzeichnet, daß, wenn das Regel-Fehlersignal einen vorbestimmten Wert bei einer Geschwindigkeitszunahme-Folge überschreitet, die Geschwindigkeit auf einen geringeren Wert zurückgebracht wird, um erneut mit der Zunahme zu beginnen.

14. Waschmaschine mit einer Vorrichtung nach einem der vorstehenden Ansprüche, dadurch gekennzeichnet, daß der Antriebsmotor der Trommel ein Universaltyp ist und mit einem gesteuerten Unterbrecher (12) in Serie geschaltet ist, dessen Steuerelektrode (27) ein Signal empfängt, das das Signal des Ausganges (26) des Mikroprozessors (20) darstellt.

## Claims

1. A device for the control of the motor (10 and 11) for driving the drum of a washing machine, comprising an electromechanical programming means with cams acting on the setting of switches (21 and 22) and means for imposing a sequence of speed variation of the motor for a predetermined setting, open or closed, of switch means of the electromechanical programming means, characterized in that it comprises a microprocessor (20) of which at least one input (20$_1$ and 20$_2$) is responsive to the setting of a switch (21 and 22) of the electromechanical programming means, said microprocessor imposing, in each phase of the program, the said speed variation sequence of the motor for a given setting of this switch (21 and 22).

2. The device as claimed in claim 1, characterized in that one switch (22) of the electromechanical programming means connected with the input (20$_2$) of the microprocessor (20) is in a first setting at the time of certain phases of emptying of the tub and at the time of certain phases of drying.

3. The device as claimed in claim 2, characterized in that the sequence imposed on the motor when the said switch (22) of the electromechanical programming means is in a first setting includes rotation at a speed slightly greater than that at which resonant rumble of the machine starts to be produced, at least one short drying phase (33 and 35), rotation (34 and 36) at the said speed less than the speed at which resonant rumble starts to be produced and a long drying phase (37 and 38).

4. The device as claimed in claim 3, characterized in that the switch (22) connected with the input ($20_2$) of the microprocessor (20) is put in its second setting prior to the production of the short drying phase (33) at the time of emptying periods of the tub after rinsing and it is in the first setting during a sufficient time after other rinsing operations to ensure that a short dry phase (33) but not the long drying one (37 and 38) is performed.

5. The device as claimed in claim 3 or claim 4, characterized in that the sequence imposes two consecutive short drying phases (33 and 35) separated by rotation (34) at a speed slightly less than that at which resonant rumble starts to be produced.

6. The device as claimed in any one of the preceding claims 3 through 5, characterized in that the control sequence is such that at the time of final drying the speed is suddenly increased up to a speed equal to the speed attained at the time of short drying and then increases progressively (37) up to a higher value (38).

7. The device as claimed in claim 6, characterized in that the progressive increase in speed of rotation of the drum is of the order of 50 rpm for every period of 20 seconds.

8. The device as claimed in any one of the preceding claims, characterized in that the microprocessor (20) has a second input ($20_1$) with which there is connected another switch (21) of the electromechanical component, said microprocessor (20) causing rotation of the drum at a constant speed when this other switch (21) (21) is in a first setting, the latter only intervening in the prewashing, washing or rinsing phases properly so called.

9. The device as claimed in any one of the preceding claims characterized in that the microprocessor comprises a third input ($20_3$) for the application of the signal for the desired drying speed.

10. The device as claimed in claim 8, characterized in that the signal applied to the third input ($20_3$) of the microprocessor (20) is an analog signal supplied by a potentiometer (24).

11. The device as claimed in claim 10, characterized in that operation in accordance with a predetermined sequence of the potentiometer (24) causes the modification of the speed increasing sequence so that the drum reaches the maximum drying speed in a short time.

12. The device as claimed in any one of the preceding claims, characterized in that the microprocessor comprises an input ($20_4$) to which there is applied a signal representative of the speed of rotation of the drum, the microprocessor comparing such true speed with the desired one in a memory in order to regulate the speed of rotation.

13. The device as claimed in claim 12, characterized in that when the regulation deviation signal exceeds a certain predetermined value during a speed increase phase, the speed is returned to a lower value in order to start the increase again.

14. A washing machine comprising a device as claimed in any one of the preceding claims, characterized in that the drive motor of the drum is of the universal type and is in series with a controlled switch (12) whose control electrode (27) receives a signal representative of the signal of the output (26) of the microprocessor (20).

# FIG_1

# FIG_2